# EUROPÄISCHE PATENTSCHRIFT

(11) **EP 0 350 844 B1**
(45) Veröffentlichungstag und Bekanntmachung des Hinweises auf die Patenterteilung: **03.11.1993**
(21) Anmeldenummer: 89112604.7
(22) Anmeldetag: 10.07.1989
(51) Int. Cl.: H04Q 11/04, H04Q 3/545, H04M 11/06

(54) **Verfahren zum Übermitteln endgerätebestimmender Programmparameterdaten von einer Kommunikationsanlage zu Kommunikationsendgeräten**
Method of transferring terminal programme parameters from an exchange to the terminals
Méthode de transfert de paramètres de programme d'un central de communication aux dispositifs terminaux

(30) Priorität: 14.07.1988 DE 3823914
(43) Veröffentlichungstag der Anmeldung: 17.01.1990
(73) Patentinhaber: SIEMENS AKTIENGESELLSCHAFT, 80333 München (DE)
(72) Erfinder: Kuhlmann, Klaus, D-8000 München 5 (DE); Kuhn, Klaus, D-8034 Germering (DE); Weiss, Albert, D-8000 München 90 (DE); Spicker, Nikolaus, D-8012 Ottobrunn (DE); Dibos, Hermann, D-7537 Remchingen (DE)

(56) Entgegenhaltungen:
- EP-A- 0 228 204
- EP-A- 0 231 630
- EP-A- 0 264 890
- EP-A- 0 347 644
- EP-A- 0 350 836
- EP-A- 0 356 568
- US-A- 4 741 026

## Beschreibung

In bestehenden, zentral gesteuerten Kommunikationsanlagen sind die Informationen über Typ, Ausstattungsmerkmale und Anschlußpositionen von angeschlossenen Kommunikationsendgeräten überwie-gend in der Kommunikationsanlage gespeichert. In den überwiegend programmgesteuerten Kommunikationsanlagen sind diese Informationen meist durch geeignete Programmparameter definiert. Die zugehörigen Daten sind hierbei für jedes Kommunikationsendgerät separat in einem hierfür vorgesehenen Bereich der üblicherweise in einer programmgesteuerten Kommunikationsanlage eingerichteten Datenbasis gespeichert. Mit Hilfe dieser Kommunikationsendgerätetyp, -ausstattung und - position beschreibenden Daten und geeignet implementierter Programme werden in der Kommunikationsanlage die dem Kommunikationsendgerät zugeordneten Vermittlungs-, Wartungs- und Bedienfunktionen realisiert. Seit geraumer Zeit ist aufgrund komplexerer Kommunikationsendgeräte und Vermittlungs-, Wartungs- und Bedienfunktionen, insbesondere Teilnehmerleistungsmerkmale, ein häufiges Ändern der Programmparameterdaten erforderlich. Durch den Einsatz von Mikroprozessoren und Mikrorechnern kann ein Teil der 'Intelligenz' der Kommunikationsanlage, d. h. ein Teil der in der Kommunikationsanlage realisierten Funktionen, insbesondere Leistungsmerkmal- und kommunikationsendgeräteindividuelle Eingabe- und Ausgabefunktionen, in das Kommunikationsendgerät verlagert werden. Dies bedingt, daß zumindest ein Teil der Programmparameterdaten - die für das jeweilige Kommunikationsendgerät relevanten - in jedem Kommunikationsendgerät in einem hierfür vorgesehenen Speicher präsent sein muß.

Des weiteren ist in der deutschen Patentanmeldung DE-A-3 732 679 ein Verfahren zum codetransparenten Übermitteln von Informationen im Signalisierungskanal eines Kommunikationsendgerätes vorgeschlagen, bei dem ein meldungsorientiertes Übermittlungsprotokoll verwendet wird. Prinzipiell ist dieses Meldungsprotokoll durch
- eine Meldungsbeginninformation,
- eine Information, die die summarische Überprüfung der Informationen eines Informationsteils erlaubt (beispielsweise durch Angabe der Anzahl der übermittelten Bits oder Bytes),
- eine Meldungscodeinformation, die die Art der Meldung anzeigt,
- einen Informationsteil, der zu übermittelnde Informationen enthält und
- eine Meldeendeinformation bestimmt.

Es handelt sich hierbei um ein Meldungsprotokoll, das zwischen Kommunikationsanlage und -endgeräten zum Informationsaustausch, z. B. Signalisierungs- und Wartungsinformationen, eingesetzt wird. Die Kommunikationsendgeräte können hierbei sowohl durch eine Teilnehmerendeinrichtung - z. B. Fernsprecher, Teletexeinrichtung - als auch durch eine Bedien- oder Wartungseinrichtung realisiert sein.

Die der Erfindung zugrundeliegende Aufgabe besteht darin, unter Einbeziehung der grundlegenden Struktur des meldungsorientierten Verfahrens zum Übermitteln von Informationen ein Verfahren zum Übermitteln der jeweiligen kommunikationsendgerätebestimmenden bzw. relevanten Programmparameterdaten von der Kommunikationsanlage zu den jeweiligen Kommunikationsendgeräten auszugestalten. Die Aufgabe wird durch die Merkmale des Anspruches 1 gelöst.

Der wesentliche Vorteil des erfindungsgemäßen Verfahren ist darin zu sehen, daß die Programmparameterdaten sowohl nach einer internen Anforderung der Kommunikationsanlagen als auch nach einer Kommunikationsendgeräteanforderung entweder an ein Kommunikationsendgerät, an mehrere oder an alle Kommunikationsendgeräte übermittelt werden können. Dem Ansteuern der Kommunikationsendgeräte dienende Adressenkriterien - diese sind in dem verwendeten meldungsorientierten Punkt-zu-Punkt-Übermittlungsprotokoll nicht vorgesehen - werden im Informationsteil der Parameterstartmeldung in Form von Kommunikationsendgerätetyp und -positionsinformationen eingefügt. Die Kommunikationsendgeräte-Typeninformationen sind im Informationsteil einer Parameteranforderungsmeldung durch eine Gerätegrößen- und Geräteausbauinformation bestimmt. In einer Parameterstartmeldung kann alternativ anstelle der Gerätegrößen- und Geräteausbauinformation eine Rundsende- oder Positionsgültigkeitsinformation eingefügt werden - siehe Anspruch 4.

Ein Einfügen einer Rundsendeinformation bewirkt, daß die Parameterstart- und die zugeordneten Parametermeldungen - beispielsweise im Sinne einer aktuellen Verteilung der Programmparameterdaten 'Uhrzeit- und Kalender' - an alle an die Kommunikationsanlage angeschlossenen Kommunikationsendgeräte übermittelt werden.

Ist in die Parameterstartmeldung eine Gerätegrößen- und Geräteausbauinformation eingetragen, so werden diese Parameterstartmeldungen und die zugeordneten Parametermeldungen an die durch die Gerätegrößen- und Geräteausbauinformation definierte Gruppe von Kommunikationsendgeräten übermittelt - beispielsweise an Fernsprechendgeräte mit einer vorgegebenen, erweiterten Tastatur.

Überwiegend nach einer durch ein Kommunikationsendgerät veranlaßten Parameterübermittlungsanforderung sind eine Parameterstart- und die zugeordneten Parametermeldungen gezielt an das anfordernde Kommunikationsendgerät zu übermitteln. Dies wird dadurch erreicht, daß in die Parameterstartmeldung eine Positionsgültigkeitsinformation und eine Positionsinformation eingefügt wird. Das Einfügen der Positionsgültigkeitsinformation bewirkt, daß die Parameterstartmeldung und die zugeordneten Parametermeldungen nur an das durch die Positionsinformation bestimmte Kommunikationsendgerät übermittelt werden. Die Positionsinformation kann vorteilhaft durch eine Gerätenummer oder eine Anschlußlageninformation bestimmt werden - siehe Anspruch 6. Die Anschlußlageninformation ist beispielsweise als eine physikalische oder logische Portnummer der Kommunikationsanlage angegeben.

Die in eine vom Kommunikationsendgerät an die Kommunikationsanlage übermittelte Parameteranforderungsmeldung eingefügte Kommunikationsendgeräte-Typinformation dient in der Kommunikationsanlage der gezielten Identifikation des jeweiligen Kommunikationsendgerätes. Eine weitere der Identifikation des Kommunikationsendgerätes dienende Information stellt eine in die Parameteranforderungsmeldung eingefügte Kommunikationsendgeräteausstattungs-Information dar. Nach einer vorteilhaften Weiterbildung gemäß Anspruch 5 ist diese durch eine Sonderausstattungsinformation und eine aus Typen- und Ausbauinformationen zusammengesetzte Beistellgeräteinformation bestimmt. Eine in codierter Form angegebene Sonderausstattungsinformation kann beispielsweise einen im Kommunikationsendgerät angeordneten Lautsprecher oder ein Kommunikationsendgeräte-Leistungsmerkmal "Lauthören" angeben. Ein Beistellgerät stellt beispielsweise eine durch eine Typeninformation bestimmte Rufnummernspeichereinrichtung mit einer durch die Ausbauinformation bestimmten Anzahl von Tastenelementen dar.

Für die summarische Überprüfung von einer Parameterstartmeldung zugeordneten und durch die Parametermeldung übermittelten Programmparameterdaten ist in die Parameterstartmeldung eine Sicherungsinformation einfügbar - siehe Anspruch 2. Die Programmparameterdaten können beispielsweise anhand einer in die Parameterstartmeldung eingefügten Mengeninformation in Bit oder Byte oder durch eine logisch bestimmte Parity-Information summarisch überprüft werden.

Für eine weitere Sicherung der einer Parameterstartmeldung zugeordneten Programmparameterdaten wird in die Parameterstartmeldung eine das Übermittlungsende anzeigende Meldungscodeinformation eingefügt - siehe Anspruch 3. Diese Sicherungsmaßnahme bewirkt, daß das Übermittlungsende von einer Parameterstartmeldung zugeordneten Programmparameterdaten auch dann eindeutig erkennbar ist, wenn die die summarische Überprüfung ermöglichenden Sicherungsinformationen fehlerhaft übermittelt wurden.

Im folgenden wird ein Ausführungsbeispiel des erfindungsgemäßen Verfahrens anhand von sechs figürlichen Darstellungen erläutert. Dabei zeigen
- Fig. 1: ein Blockschaltbild einer Kommunikationsanlage einschließlich Kommunikationsendgeräte-Anschlußbereich,
- Fig. 2: ein Blockschaltbild der Hardwarekomponenten eines Kommunikationsendgerätes,
- Fig. 3: in einem Blockschaltbild die Prozeßarchitektur eines nach Fig. 2 realisierten Kommunikationsendgerätes,
- Fig. 4: den Aufbau einer Parameteranforderungsmeldung,
- Fig. 5: den Aufbau einer Parameterstartmeldung und
- Fig. 6: den Aufbau einer Parametermeldung.

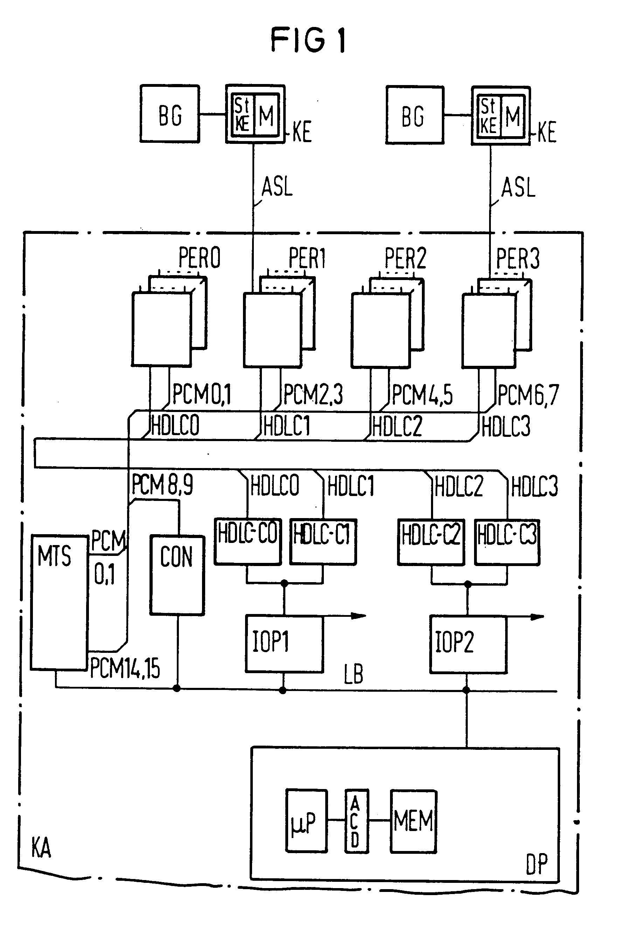

Fig. 1 zeigt beispielhaft ein dem erfindungsgemäßen Verfahren zugrundeliegendes Kommunikationssystem, das durch eine Kommunikations- bzw. Vermittlungsanlage KA und durch an sie angeschlossene Kommunikationsendgeräte KE gebildet wird. Die Kommunikationsanlage KA ist im wesentlichen in drei hierarchische Strukturebenen unterteilt. Die im wesentlichen dem Anschluß von Endgeräten und Leitungen dienende Peripherieebene wird durch drei Peripheriemodule PER1, PER2, PER3 gebildet, die jeweils aus mehreren Teilnehmeranschlußbaugruppen bzw. Leitungsanschlußbaugruppen derart gebildet sind, daß maximal 64 Ports - z. B. 32 Zweidraht-Leitungsanschlüsse - an dem Peripheriemodul PER1...PER3 zugänglich sind.

Die Teilnehmeranschlußbaugruppen können beispielsweise dem Anschluß analoger Teilnehmerendgeräte dienen. Sie weisen dann üblicherweise je Endgerät eine Schnittstelleneinrichtung mit Rufund Schleifenschlußindikation auf, der jeweils eine Prozessoreinrichtung zur Analog/Digital- bzw. Digital/Analog-Wandlung und zur programmierbaren Eingangsimpedanz bzw. Pegelanpassung zugeordnet ist. Eine mögliche Realisierung dieser Bestandteile einer Teillnehmeranschlußbaugruppe ist der US-A- 4 381 561 zu entnehmen. Die Schnittstelle zwischen maximal 16 solcher leitungsindividuellen Einrichtungen und kommunikationsanlageninternen PCM-Verbindungen bzw. HDLC-Steuerleitungen (High Level Data Link Control) wird durch eine Baugruppen-Prozessorsteue rung gebildet, die in Aufbau und Wirkungsweise beispielsweise dem in der US-A- 4 694 452 beschriebenen Prozessor entsprechen kann. Weitere Details der Funktion dieses Prozessors sind der Produktschrift der Firma Siemens AG, PBC Peripherial Board Controller PEB 2050 (SM 205) Preliminary Technical Description (Part 1) Ordering Number B/2684-101, zu entnehmen.

In jedem der Peripheriemodule PER1, PER2, PER3 können allein, zusätzlich oder in Kombination andere Anschlußbaugruppen für beispielsweise digitale oder ISDN-Geräte bzw. Verbindungsleitungen vorgesehen sein. Für das Ausführungsbeispiel sei angenommen, daß überwiegend digitale bzw. ISDN-orientierte Kommunikationsendgeräte KE angeordnet sind. An diese Anschlußbaugruppen sind digitale Kommunikationsendeinrichtungen KE über meist integrierte Übertragungstechnik und digitalen Anschlußleitungen ASL angeschlossen. Diese Kommunikationsendgeräte KE sind jeweils mit einer meist in Mikroprozessortechnik realisierten Steuerung ST-KE und mit einem jeweils in einen Programmund Datenspeicher unterteilten Speicher M ausgestattet. In dem beispielsweise als nicht flüchtiger Speicher realisierten Datenspeicher werden neben individuellen Benutzerdaten - z. B. Rufnummern - auch die Programmparameterdaten gespeichert. An die Kommunikationsendgeräte KE sind jeweils über eine geeignete Schnittstelle Beistellgeräte BG anschließbar. Dies können beispielsweise Rufnummernspeicher oder Chipkartenleser sein. Die Steuerung der Beistellgeräte BG wird zumindest teilweise von der Steuerung StKE des Kommunikationsendgerätes übernommen.

Die im wesentlichen durch Baugruppen-Prozessorsteuerungen und wenigstens einen der Koordinierung derselben dienenden Mikroprozessor gebildeten Modul-Prozessorsteuerungen verwalten jeweils zwei PCM-strukturierte Verbindungen (PCM-Highways) PCM2, PCM3; PCM4, PCM5; PCM6, PCM7 und jeweils eine doppelgerichtete Verbindung zur Übergabe und Aufnahme von Steuerinformationen, die im standardisierten Übertragungsverfahren HDLC übertragen werden. Ein weiteres Peripheriemodul PER0 dient der Versorgung des Kommunikationssystems mit Hörtönen, Ansagen und Musikeinspielungen während des Haltezustandes von Verbindungen. Das zusätzliche Peripheriemodul PER0 enthält außerdem Hörzeichenempfänger, Sende- und Empfangseinrichtungen für im Mehrfrequenzcode-Verfahren übertragene Wählzeichen sowie Testsender und Testempfänger. Das zusätzliche Peripheriemodul PER0 ist in ähnlicher Weise wie die Peripheriemodule PER1, PER2, PER3 über zwei PCM-Highways PCM0, PCM1 sowie über eine Informationsübertragungsstrecke HDLCO angeschaltet.

Die nächste Strukturebene des digitalen Kommunikationssystems wird durch insgesamt vier (Steuerinformation-) Übermittlungsbausteine HDLC-C0, HDLC-C1, HDLC-C2, HDLC-C3 (HDLC-Controller) sowie durch zwei Input/Output-Prozessoren IOP1, IOP2 gebildet, von denen der Input/Output-Prozessor IOP1 den beiden Übermittlungsbausteinen HDLC-C0 und HDLC-C1, der Input/Output-Prozessor IOP2 dagegen den Übermittlungsbausteinen HDLC-C2, HDLC-C3 zugeordnet ist.

Da die HDLC-Norm für den Austausch von Daten, Befehlen und Meldungen in vielen einschlägigen praktisch realisierten Systemen benutzt wird, sind entsprechende (Steuerinformation-) Übermittlungsbausteine in Form integrierter Schaltkreise realisiert; die in der Fig. 1 dargestellte Kommunikationsanlage nutzt diese Bausteine (HDLC-Controller) in der üblichen Weise, so daß keine Hardware- oder Softwareanpassungen für den Einsatz dieser Bausteine in der Kommunikationsanlage erforderlich sind. Im Rahmen der Kommunikationsanlage ist in den in der HDLC-Norm festgelegten Datenübertragungsblöcken das Blockprüfungsfeld von besonderer Bedeutung, da mit der in diesem Feld übertragenen Blockprüfzeichenfolge eine gegen Fehler gesicherte Übergabe von Steuerinformationen möglich ist.

In die gleiche Strukturebene wie die (Steuerinformation-) Übermittlungsbausteine HDLC-C0...HDLC-C3 gehört auch ein digitaler Koppelfeldbaustein MTS, an den sämtliche PCM-Highways PCM0, PCM1...PCM14, PCM15 angeschlossen sind. Der digitale Koppelfeldbaustein ist beispielsweise durch den integrierten Schaltkreis PEB 2040, Siemens AG, realisiert. Aufbau und Wirkungsweise eines digitalen Koppelfeldbausteins sind beispielsweise in der US-A- 3 678 206 beschrieben.

Ebenfalls in die Strukturebene der Übermittlungsbausteine HDLC-C0...HDLC-C3 und des digitalen Koppelfeldbausteines MTS eingefügt ist ein Konferenz-Netzwerk CON, das mit zwei weiteren PCM-Highways PCM8, PCM9 an den digitalen Koppelfeldbaustein MTS angeschlossen ist. Eine mögliche Realisierung für das Konferenz-Netzwerk C0N ist in der US-A- 4 054 757 beschrieben.

Der digitale Koppelfeldbaustein MTS und das Konferenz-Netzwerk C0N sind ebenso wie die beiden Input/Output-Prozessoren IOP1, IOP2 an einen lokalen Multiplexbus LB angeschlossen, der die Schnittstelle zur hierarchisch obersten Strukturebene der digitalen Kommunikationsanlage darstellt. Diese Strukturebene wird durch einen zentralen Steuerprozessor DP gebildet, der das Zusammenwirken aller Bausteine und Module der Kommunikationsanlage koordiniert. Neben takterzeugenden Einrichtungen ist der zentrale Steuerprozessor DP mit einem Mikroprozessor µP, einer vorgeschalteten Zugangssteuerung ACO und einem Speicher MEM ausgestattet. In diesem Speicher MEM sind die Programmparameterdaten PD für jedes Kommunikationsendgerät KE in einem hierfür vorgesehenen Speicherbereich gespeichert. Wesentliche Funktionen des zentralen Steuerprozessors sind also die Speicherung und anforderungsgerechte Abarbeitung von vermittlungstechnischen Programmen und peripheriezugewandt die Steuerung und Überwachung des lokalen Bus LB. Zusätzliche übliche Funktionen des zentralen Steuerprozessors sind betriebstechnische Abwicklung, sicherheitstechnische Anzeigen sowie Takterzeugungen.

Das erfindungsgemäße Verfahren ist für das Übermitteln von Programmparameterdaten zwischen der Kommunikationsanlage KA und den an sie angeschlossenen Kommunikationsendgeräten KE vorgesehen, d. h. im wesentlichen zwischen Kommunikationsendgerät KE und den Peripheriemodulen PER1...PER3. Wie eingangs erläutert, ist die prinzipielle Struktur der meldungsorientierten Übermittlungsprozedur bereits in der Patentanmeldung DE-A-3 732 679 vorgeschlagen. Die kommunikationsanlagen- und kommunikationsendgeräteinternen Funktionen zur Weiterbearbeitung der Meldungen der verwendeten Übermittlungsprozedur sind in den jeweiligen Steuereinrichtungen mit Hilfe entsprechender Software realisiert. Da diese Funktionen für die Erläuterung des erfindungsgemäßen Verfahrens nicht erforderlich sind, wurde auf eine detaillierte Darstellung verzichtet.

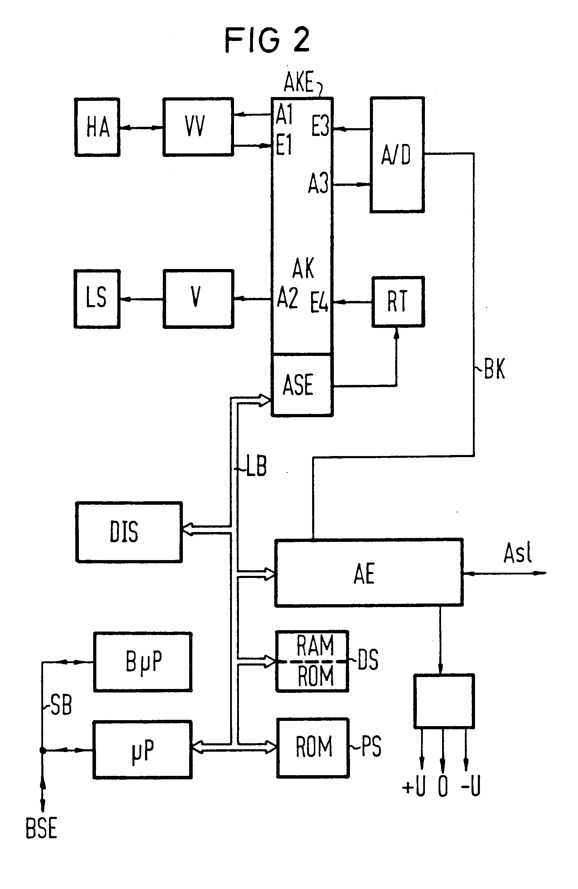

Fig. 2 zeigt ein Hardware-Blockschaltbild eines Kommunikationsendgerätes ohne Freisprecheinrichtung. Die zentrale Einrichtung zur Steuerung der Teilnehmer-Bedienerprozeduren, zur Steuerung aller im Kommunikationsendgerät zu übermittelnder akustischer Signale und zur Steuerung der Signalisierung mit der Kommunikationsanlage ist durch ein Mikroprozessorsystem µP realisiert. Beispielsweise kann dieses Mikroprozessorsystem µP durch einen Siemens Mikroprozessor SAB 80 C 31 gebildet sein. Über einen aus Steuer-, Adreß- und Datenleitungen gebildeten lokalen Bus LB ist das Mikroprozessorsystem µP mit einem Programmspeicher PS und einem Datenspeicher DS verbunden. Der in ROM-Speichertechnik realisierte Programmspeicher PS ist beispielsweise für ein maximal 64 kByte umfassendes Programm ausgelegt. Der ebenfalls beispielsweise 64 kByte umfassende Datenspeicher DS kann beispielsweise zur Hälfte einen in ROM-Speichertechnik ausgeführten Festspeicher - für Festdaten, Parameterdaten und Tabellen - und zur anderen Hälfte einen in RAM-Speichertechnik ausgeführten Speicher - beispielsweise zur Speicherung benutzerindividueller Daten - enthalten. Das Mikroprozessorsystem µP weist zusätzliche eine serielle Busschnittstelle auf. Diese serielle Busschnittstelle ist über den seriellen Bus SB mit einem Bedienfeld-Mikroprozessorsystem BµP verbunden. Über diesen seriellen Bus SB werden zusätzlich auch die an die Kommunikationseinrichtung angeschlossenen Beistellgeräte BSE betrieben. In dem Bedienfeld-Mikroprozessorsystem BµP werden die von den Bedienelementen erzeugten codierten Informationen erkannt, über den seriellen Bus SB zum Mikroprozessorsystem µP seriell übertragen und dort zu Signalisierungsinformationen und zu Bedienerführungsinformationen - beispielsweise für Leuchtdioden, Töne und Anzeigen in einer Anzeigeeinrichtung - weiterverarbeitet.

Des weiteren ist an den lokalen Bus LB eine Anzeigeeinrichtung DIS angeschlossen. Die Anzeigeeinrichtung DIS ist beispielsweise durch ein LCD-Display (zwei Zeilen à 24 Zeichen) realisiert.

Dieses LCD-Display wird zur Anzeige von Ziffern und Klartext eingesetzt. Bei Verwendung des Kommunikationsendgerätes als Vermittlungseinrichtung kann die Anzeigeeinrichtung DIS beispielsweise durch ein LCD-Display (8 Zeilen à 40 Zeichen) realisiert werden.

Das Kommunikationsendgerät ist über eine Anschalteeinrichtung AE mit einer Teilnehmeranschlußleitung Asl verbunden. Über diese Teilnehmeranschlußleitung Asl kommuniziert das Kommunikationsendgerät mit einer Kommunikationsanlage. Über die Teilnehmeranschlußleitung Asl werden die 64 kBit/s umfassenden Nachrichten und die 8 kBit/s umfassenden Signalisierungsinformationen bidirektional übermittelt. Die im Signalisierungskanal übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die für die Kommunikationsendgeräte-Kommunikationsanlagen-Signalisierung eingesetzten Protokollschichten sind als Bitübertragungsschicht (Schicht 1), als Sicherungsschicht (Schicht 2) und als Vermittlungsschicht (Schicht 3) definiert. Die Bitübertragungsschicht, auch als physikalische Ebene bezeichnet, besorgt das Übermitteln der Informationen in den Nachrichten- und Signalisierungskanälen gleichzeitig in beiden Richtungen. Hierbei ist das Aktivieren, Deaktivieren und Betreiben des Kommunikationsendgerätes eingeschlossen. Die Sicherungsschicht übernimmt für die anschließende Vermittlungsschicht das gesicherte Übermitteln der Signalisierungsinformationen zwischen der Kommunikationsanlage und dem Kommunikationsendgerät. Dies kann beispielsweise durch eine HDLC-Übermittlungsprozedur oder durch eine Last-Look-Prozedur erfolgen. Unter Last-Look-Prozedur ist ein mehrmaligen Übermitteln der Informationen zu verstehen, die in der Empfangseinrichtung mindestens zweimal hintereinander als gleich erkannt und außerdem verschieden von den zuletzt empfangenen gültigen Signalisierungsinformation sein muß, um als gültig erkannt zu werden.

Die Vermittlungsschicht dient dem Aufbau, Überwachen und Abbau der Kommunikationsverbindungen sowie zur Steuerung und Kontrolle der durch die Kommunikationsanlage unterstützten Leistungsmerkmale. In der Anschlußeinrichtung werden im wesentlichen die Funktionen der Bitübertragungsschicht (Schicht 1) unter Steuerung des Mikroprozessorsystems µP realisiert. In der Anschalteeinrichtung AE sind folgende wesentliche Funktionen enthalten:
- übertragungstechnische Anpassung an die Teilnehmeranschlußleitung Asl
- Übermitteln der Signalisierungs- und Nachrichteninformationen durch nach einem Zeitgetrenntlage-Übertragungsverfahren gebildeten Signalen
- Trennen von Nachrichten- und Signalisierungsinformationen und Weiterleiten an die entsprechenden Einrichtungen und
- Auskoppeln einer über die Anschlußleitung Asl übertragenen und von der Kommunikationsanlage bereitgestellten elektrische Energie und deren Weiterführung an eine kommunikationsendgeräteinterne Stromversorgung SV.

Die Anschlußeinrichtung AE ist beispielsweise durch einen großintegrierten kundenspezifischen Schaltkreis und durch mehrere Schichtschaltungen realisiert.

In der Stromversorgung SV wird die von der Anschlußeinrichtung AE übermittelten elektrische Energie in eine für den Betrieb der Kommunikationsendeinrichtung erforderliche positive und negative Speisespannung ± U umgesetzt. Vorzugsweise sind diese Stromversorgungen SV durch platzsparende Schaltregler-Stromversorgungen realisiert.

Die in der Anschlußeinrichtung AE von über die Anschlußleitung Asl übermittelten Informationen abgetrennten Signalisierungsinformationen werden lokal-busgemäß aufbereitet und über den lokalen Bus LB an das Mikroprozessorsystem µP übermittelt. Im Mikroprozessorsystem µP werden diese Signalisierungsinformationen gemäß den der Sicherungsschicht und Vermittlungsschicht zugeordneten Funktionen weiterverarbeitet und die entsprechenden Reaktionen - z. B. Ansteuern von Ausgabeeinheiten - eingeleitet. Die in der Anschlußeinrichtung AE abgetrennten Nachrichteninformationen gelangen an eine Analog/Digital-Umsetzeinrichtung A/D. In dieser werden aus den von der Anschlußeinrichtung AE abgegebenen digitalisierten Nachrichten- bzw. Sprachsignalen analoge Sprachsignale gebildet. Die an einem weiteren Eingang der Analog/Digital-Umsetzeinrichtung A/D ankommenden analogen Sprachsignale werden in digitale Sprachsignale umgesetzt. Die Codierung bzw. Decodierung der analogen bzw. digitalen Sprachsignale erfolgt durch das bekannte, standardisierte PCM-Verfahren. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen. Durch den Akustikkoppler AK werden die von der Analog/Digital-Umsetzeinrich tung A/D ankommenden analogen Signale entweder nur an einen ersten Ausgang A1 oder an den ersten und an einen zweiten Ausgang A1, A2 vermittelt. Ausgang A1 ist über einen Vorverstärker VV mit dem Handapparat des Kommunikationsendgerätes verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von einem im Handapparat HA angeordneten Mikrophon abgegebenen Sprachsignale über den Vorverstärker VV an einen ersten Eingang E1 des Akustikkopplers AK. Die analogen Sprachsignale werden durch den Akustikkoppler AK an einen mit der Analog/Digi-tal-Umsetzeinrichtung A/D verbundenen dritten Ausgang A3 vermittelt. Diese analogen Sprachsignale werden in der Analog/DigitalUmsetzeinrichtung A/D in digitale Signale umgesetzt und in der Anschlußeinrichtung AE in den zur Anschlußleitung Asl übermittelten Nachrichtenstrom eingefügt. Ist im Kommunikationsendgerät das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Kommunikationsendgerät angeordneten Lautsprecher LS. Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umgesetzt, durch die die Verbindungswege im Akustikkoppler AK eingestellt werden. Der Akustikkoppler AK ist beispielsweise durch in CMOS-Technik ausgeführte analoge Koppelpunkte realisiert. Zusätzlich steuert die Ansteuereinrichtung ASE einen Ruftongenerator RT, der je nach Ansteuerung unterschiedliche Ruftöne mit entsprechenden Rufrythmen erzeugt. Diese Ruftöne werden über den Akustikkoppler AK unter Steuerung der Ansteuereinrichtung ASE an den Handapparat HA und/oder den Lautsprecher vermittelt.

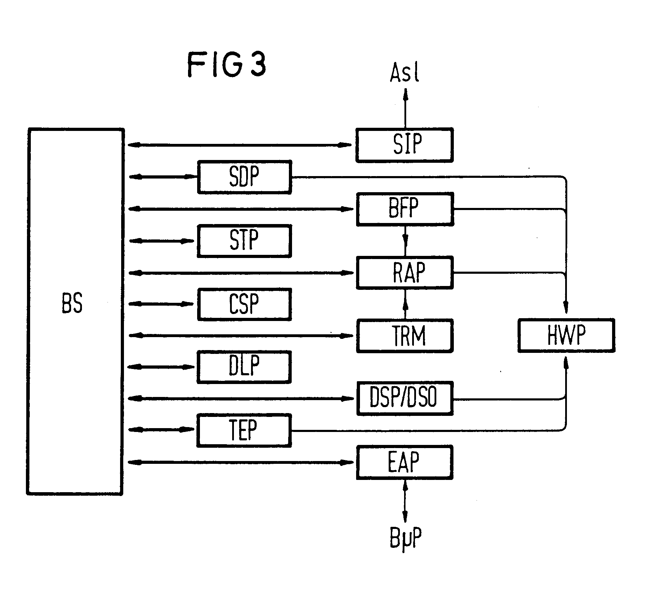

Fig. 3 zeigt die Prozeßarchitektur des Mikroprozessorsystems µP. Der Informations- bzw. Datenaustausch zwischen den einzelnen Prozessen erfolgt grundsätzlich - bis auf wenige Ausnahmen - über ein auf das Mikroprozessorsystem µP zugeschnittenes Betriebssystem. Ein derartiges Betriebssystem stellt beispielsweise das für das Siemens Mikroprozessorsystem 80 C 51 vorgesehene Betriebssystem COSMOS 51 dar. Dieses Betriebssystem bietet für den Informationsaustausch unter den Prozessen einheitliche organisatorische Schnittstellen.

Im Mikroprozessorsystem µP sind folgende Prozesse realisiert:

### - Bedienfeldprozeß BFP

Der Bedienfeldprozeß verwaltet die im Endgerät festgelegten Bedienprozeduren sowie die vermittlungstechnischen Prozeduren, die im Zusammenwirken mit der Kommunikationsanlage vorgesehen sind. Es werden nur Bedienprozeduren - initialisiert durch Tastenanreiz - verwaltet, die dem Kommunikationsendgerät bekannt sind. Derartige Prozeduren bzw. Funktionen stellen beispielsweise die
- Steuerung der Ruflautstärke
- die vermittlungstechnische Leitungsbehandlung
- Steuerung der Akustikeinrichtung usw. dar.

### - Lokalprozeß CSP

Durch diesen Prozeß werden alle lokalen und systembezogenen Bedienprozeduren und Speicherfunktionen - wie beispielsweise Namentasten, Kurzrufnummern, Termine usw. - realisiert.

### - Anzeigeprozeß DSP/DSO

Der Anzeigeprozeß ist in einen Verwaltungs- und einen Ausgabeprozeß DSP/DSO aufgeteilt. Mit Hilfe dieses Anzeigeprozesses werden zwei unterschiedliche Anzeigengrößen - siehe Erläuterungen zu Fig. 1 - gesteuert und verwaltet. Welche der beiden Anzeigengrößen im Kommunikationsendgerät vorliegt und zu steuern bzw. verwalten ist, wird durch die von der Kommunikationsanlage übermittelten Parameterdaten bestimmt. Zu den Aufgaben des Anzeigeprozesses gehören u. a.
. das Verwalten eines Anzeigedatenspeichers,
. eine Prioritätensteuerung in Abhängigkeit der Anzeigengröße,
. ein Bilden von Uhrzeit und Datum (Tag, Monat) nach einer von der Kommunikationsanlage durch Parameterdatenübermittlung vorgegebenen Grundeinstellung und periodischer Synchronisation durch die Kommunikationsanlage.

### - Rufausgabeprozeß RAP

Durch den Rufausgabeprozeß RAP werden unterschiedliche Ruftypen gebildet und in Abhängigkeit von einer Rufpriorität an die anfordernden bzw. folgenden Prozesse übermittelt. Die Rufrythmen werden über im Rufausgabeprozeß RAP implementierte Zeitgeneratoren erzeugt. Die für das jeweilige Kommunikationsendgerät vorgesehenen Rufarten, -typen und -prioritäten werden durch die von der Kommunikationsanlage übermittelten Parameterdaten bestimmt.

### - Parameterdaten-Übermittlungsprozeß DLP

Der Parameterdaten-Übermittlungsprozeß DLP (Downloading Process) konfiguriert die Bedieneroberfläche des Kommunikationsendgerätes sowie deren Leistungsmerkmale. Er überwacht selbständig seinen Datenbereich und führt gegebenenfalls eine Fehlerkorrektur durch. Der Parameterdaten-Übermittlungsprozeß DLP stellt zusätzlich eine Reihe von Zugriffsprozeduren für anderen Prozesse zur Verfügung, über die die von ihm verwalteten Parameterdaten abgefragt werden können. Die Parameterdaten können einzeln oder blockweise nach einer Initialisierung im Kommunikationsendgerät von der Kommunikationsanlage angefordert und übermittelt werden.

### - Sicherungstechnischer Prozeß STP

Dieser zyklisch ablaufende Prozeß kontrolliert den Programm-Watchdog, legt über erfaßte Fehler Fehlerprotokolle an und überprüft nacheinander jeden im Kommunikationsendgerät eingesetzten Sub-Mikroprozessor.

### - Signalisierungsprozeß SIP

Dieser Prozeß realisiert die zentrale Datenübertragungsschnittstelle zwischen der Kommunikationsanlage und dem Kommunikationsendgerät. Mit Hilfe dieses Signalisierungsprozesses wird der Empfang und das Senden der Signalisierungsinformation durchgeführt. Die einzelnen empfangenen Signalisierungsinformationen werden hierbei im Last-Look-Verfahren - siehe Beschreibung zu Fig. 1 - bewertet. Die erkannten Signalisierungsinformationen werden in entsprechende Anreize für eine Weitergabe an die anzusteuernden Prozesse umgesetzt. Analog hierzu werden die von den übrigen Prozessen übermittelten Anreize bzw. Informationen in entsprechende Signalisierungsinformationen umgesetzt.

### - Ein-/Ausgabeprozeß EAP

Durch diesen Ein-/Ausgabeprozeß EAP ist die Schnittstelle zu den Sub-Mikroprozessoren (beispielsweise Bedienfeld-Mikroprozessor) über den seriellen Bus SB realisiert. Mit Hilfe dieses Ein-/Ausgabeprozesses EAP werden die von den Sub-Mikroprozessoren übermittelten physikalischen Daten in logische Informationen für die Ansteuerung der übrigen Prozesse umgesetzt. Analog hierzu werden die von den anderen Prozessen übermittelten logischen Informationen in physikalische Informationen für die Ansteuerung der Sub-Mikroprozessoren umgewandelt.

### - Testprozeß TEP

Der Testprozeß TEP dient im wesentlichen Testzwecken während der Entwicklungsphase und einer späteren Wartung des Kommunikationsendgerätes. Durch diesen Testprozeß werden Informationen für einen Kommunikationsendgeräte-Tester aufbereitet und an diesen übermittelt. Die kommunikationsendgeräteinternen Datenzugriffe erfolgen hierbei über in den anderen Prozessen vorhandenen Zugriffsprozeduren.

### - Hardwaretreiberprozeß HWP

Der Hardwaretreiberprozeß HWP stellt das Bindeglied zwischen den programmgesteuerten Prozessoren und den Hardwareelementen der Kommunikationsendeinrichtung dar. Er verfügt über die zur Steuerung der Hardwareelemente erforderlichen Treiberroutinen. Beispielsweise werden folgende Vorgänge vom Hardwaretreiberprozeß HWP gesteuert:
- Ein-/Ausschalten des Handapparates
- Steuerung des Rufes
- Ein-/Ausschalten des Sprachkanals
- Ein-/Ausschalten des Lautsprecherverstärkers, usw.

Der Hardwaretreiberprozeß HWP kommuniziert als einziger mit den übrigen Prozessen nicht über das Betriebssystem BS. Die Steuerinformationen gelangen oder kommen direkt von den Prozessen, in deren Ablauf die Steuerung eines dem Hardwaretreiberprozeß HWP zugeordneten Hardwareelementes vorgesehen ist. Diese Maßnahme ist sinnvoll, da bei einer Ansteuerung eines Hardwareelementes - und umgekehrt - keine unterschiedlichen Prozeßabläufe auftreten.

### - Selbsttest-Prozeß SDP

Ein Selbsttest des Kommunikationsendgerätes wird durch die Kommunikationsanlage eingeleitet und beendet. Die Ergebnisse des Selbsttest-Prozesses SDP werden akustisch und optisch angezeigt und der Kommunikationsanlage übermittelt. Zu den Selbsttest-Funktionen gehören
- ein Leuchtdiodentest
- eine Tastenkontrolle
- ein Tontest
- eine Anzeige der Fehlerspeicherinhalte
- ein Test der Hardwarekomponenten, usw.

### - ein Kalenderprozeß TRM

In diesem Kalenderprozeß TRM wird ein Terminkalender für beispielsweise 15 Eintragungen verwaltet. Die einzelnen Termine werden hierbei automatisch chronologisch eingeordnet und kontrolliert. Der Terminablauf wird akustisch durch beispielsweise einen Erinnerungsruf oder durch eine optische Anzeige gemeldet. Zusätzlich kann über eine Leuchtdiode angezeigt werden, ob sich Termine im Ablauf befinden.

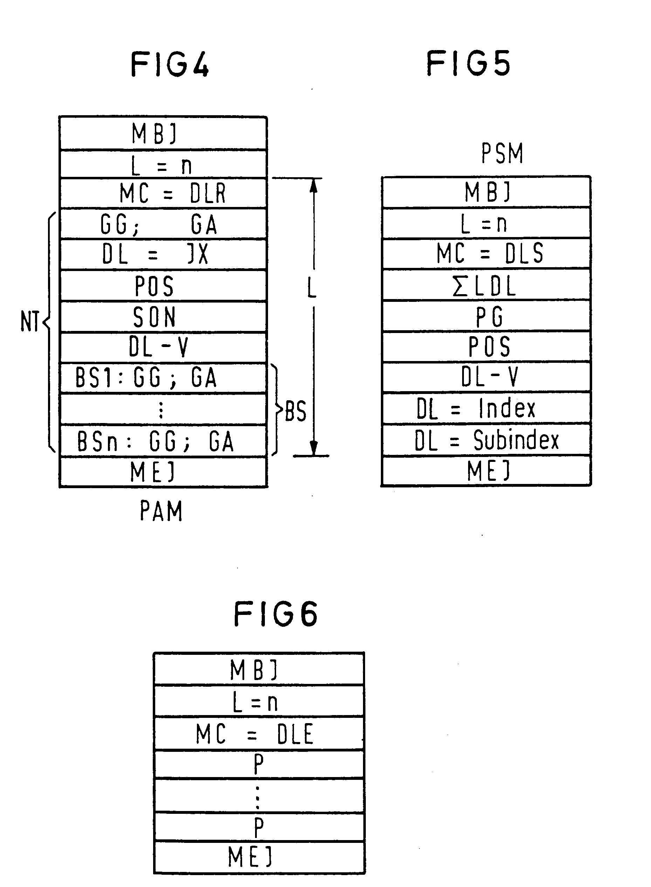

Anhand der Zeichnungen Fig. 4 bis Fig. 6 werden im folgenden die einzelnen Protokollmeldungen dargestellt und die möglichen Informationsinhalte dieser Meldungen angegeben.

So zeigt Fig. 4 eine Parameteranforderungsmeldung PAM, die im Kommunikationsendgerät KE nach
- jeder Neusynchronisierung der Signalisierung
- jeder Änderung des Ausbaus des Kommunikationsendgerätes und
- jedem Zurücksetzen der Programmsteuerung
- gebildet und an die Kommunikationsanlage KA übermittelt wird.

Jede Meldung - auch die später erläuterten - ist mit einer Meldungsbeginn- und einer Meldungsendeinformation MBI, MEI versehen. Diese Meldungsbeginn- bzw. Meldungsendeinformation MBI, MEI kann beispielsweise durch ein 1-Byte-Meldungsbeginnzeichen (beispielsweise entsprechend der HDLC-Übermittlungsprozedur) oder durch eine 2-Byte-Information - siehe die bereits angegebene Patentanmeldung DE-A-3 732 679- gebildet werden. Für das Ausführungsbeispiel sei angenommen, daß die Meldungsbeginn- und Meldungsendeinformation MBI, MEI durch eine 2-Byte-Information gebildet ist. Hierbei ist die Bitkombination des ersten Bytes so bestimmt, daß diese nicht mit den verwendeten codierten Informationen eines folgenden Informationsteils der Parameteranforderungsmeldung PAM kollidiert. Mit diesem ersten Byte wird demnach angezeigt, daß es sich um ein Zeichen handelt, das außerhalb des Zeichenumfangs der verwendeten codierten Informationen definiert ist. Mittels des zweiten Bytes wird die Art des Zeichens bestimmt. So kann dem ersten Byte - beispielsweise mit Transportzeichen bezeichnet - eine Bitkombination, in sedezimaler Schreibweise EF, zugeordnet werden. Dem zweiten Byte kann beispielsweise für die Meldungsbeginninformation MBI die Bitkombination 'sedezimal 01′ und für die Meldungsendeinformation MEI die Bitkombination 'sedezimal 02′ zugeordnet werden. Diese Bitkombination kann mit derjenigen Bitkombination übereinstimmen, die den meldungslosen (IDLE-) Zustand im Signalisierungskanal angibt. An die Meldungsbeginninformation MBI ist eine beispielsweise 1-Byte-umfassende Meldungslängeninformation L angefügt. Diese Meldungslängeninformation L gibt die Anzahl n der Bytes an, die ein folgendes Informationsteil NT enthält. Die Meldungscodeinformation MC bestimmt die Art der zu übermittelnden Protokollmeldung. Da eine Parameteranforderungsmeldung PAM bestimmt werden soll, ist eine entsprechende codierte Meldungscodeinformation MC-DLR, beispielsweise sedezimal 51 H, eingetragen. Durch die folgende, beispielsweise 2-Byte umfassende Information wird der Kommunikationsendgerätetyp bestimmt. Diese Kommunikationsendgerätetypen-Information setzt sich aus einer Gerätegrößen- und einer Geräteausbauinformation GG, GA zusammen. Durch die Gerätegrößeninformation GG wird bestimmt, ob es sich beispielsweise um einen Einzelfernsprecher, einen Teamfernsprecher, einen Vermittlungsplatz oder eine betriebstechnische Konsole handelt. Die Geräteausbauinformation GA gibt den Ausbau des Kommunikationsendgerätes KE hinsichtlich der Größe der Tastatur, Größe der Anzeigen und weiterer Bedienelemente an. Die im Anschluß an die Kommunikationsendgerätetypen-Information übermittelte, beispielsweise 1-Byte umfassende Indexinformation IX gibt an, welche Art von Programmparameterdaten P von der Kommunikationsanlage KA zum Kommunikationsendgerät KE übermittelt werden sollen. So sind beispielsweise folgende anschließend aufgelistete Indexinformationen IX möglich:
- Tastenbelegungsinformationen für unterschiedliche Kommunikationsendgerätetypen und -ausbaustufen,
- akustische Rufausgaben,
- Anrufarten,
- Steuerung der Anzeigen im Kommunikationsendgerät,
- Uhrzeit,
- Festtexte,
- Leistungsmerkmale,
- Leitungsfunktionen,
- Meldungsformate,
- Übermittlung von Programmparameterdaten nicht erwünscht und
- bisher keine Programmparameterdaten P von der Kommunikationsanlage KA erhalten.

An die Indexinformation IX ist eine wiederum 1 Byte-umfassende Kommunikationsendgeräte-Positionsinformation POS angefügt. Diese Positionsinformation POS kann beispielsweise durch eine logische Gerätenummer oder eine Anschlußlageninformation gebildet werden. Die Anschlußlageninformation kann beispielsweise durch eine logische oder physikalische Portnummer der Kommunikationsanlage angegeben werden.

An die Positionsinformation POS schließt sich eine Sonderausstattungsinformation SON an. Diese 1-Byte umfassende Sonderausstattungsinformation SON kann beispielsweise bitorientiert organisiert sein. So kann beispielsweise durch die Informationsinhalte der einzelnen Bits bestimmt werden, ob im Kommunikationsendgerät KE beispielsweise "Lauthören", "Freisprechen", usw. realisiert ist. Durch die anschließend übermittelte, ebenfalls 1-Byte umfassende Information DL-V wird der Kommunikationsanlage KA angezeigt, welchen Aktualisierungsgrad die im Kommunikationsendgerät KE gespeicherten Programmparameterdaten P aufweisen. Mit Hilfe dieser Information DL-V kann in der Kommunikationsanlage KA festgestellt werden, ob die im Kommunikationsendgerät KE gespeicherten Programmparameterdaten P noch dem aktuellen Stand entsprechen. An die diesen Stand der Programmparameterdaten P anzeigende Information DL-V wird eine beispielsweise 3-Byte umfassende Beistellgeräteinformation BS angefügt. Durch diese Beistellgeräteinformation BS ist das Vorhandensein, der Typ und der Ausbau von Beistellgeräten bestimmt. Hierbei wird beispielsweise ein Beistellgerät durch eine 1-Byte umfassende, aus Typen- und Ausbauinformationen GG, GA zusammengesetzte Beistellgeräteinformation BS definiert. Sind keine Beistellgeräteinformationen BS in der Parameteranforderungsmeldung PAM eingetragen, so ist kein Beistellgerät an das jeweilige Kommunikationsendgerät KE angeschlossen. Der Typ des Beistellgerätes - beispielsweise Rufnummernspeichereinrichtung oder Kartenleser - wird durch die Typeninformation GG definiert. Der Ausbau des jeweiligen Kommunikationsendgerätes - beispielsweise die Anzahl der Tasten eines Rufnummernspeichers - wird durch eine Ausbauinformation GA angegeben.

Fig. 5 zeigt den prinzipiellen Aufbau einer Parameterstartmeldung PSM. Eine Parameterstartmeldung PSM wird entweder nach Empfang und Auswertung einer Parameteranforderungsmeldung PAM oder einer kommunikationsanlageninternen Parameterübermittlungsanforderung in der Kommunikationsanlage KA erzeugt und an die Kommunikationsendgeräte KE übermittelt. Die Meldungsbeginnund Meldungsendeinformation MBI, MEI wird hierbei entsprechend der in der Fig. 2 dargestellten Meldung gebildet. Durch eine vorgegebene, codierte - beispielsweise sedezimal 2 BH - Meldungscodeinformation MC-DLS ist eine Meldung als eine Paramemeterstartmeldung PSM bestimmt. An die Meldungscodeinformation MC ist eine Sicherungsinformation LDL angefügt. In dieser Sicherungsinformation LDL ist beispielsweise die Summe der Bytes der Programmparameterdaten P angegeben, die anschließend an die Parameterstartmeldung PSM übermittelt werden. Im Anschluß an diese Sicherungsinformation LDL wird eine 1-Byte umfassende Kommunikationsendgeräte-Typeninformation GG, GA übermittelt. Diese Kommunikationsendgeräte-Typeninformation ist - wie bereits erläutert - durch eine Gerätegrößen- und eine Geräteausbauinformation GG, GA gebildet. Alternativ hierzu kann - wie bereits in der Beschreibungseinleitung erläutert - eine Rundsende- oder Positionsgültigkeitsinformation PG eingefügt werden. Für das Ausführungsbeispiel sei angenommen, daß die Parameterstartmeldung PSM gezielt an ein Kommunikationsendgerät KE zu übermitteln ist. Somit ist in die Kommunikationsendgeräte-Typeninformation GG, GA durch eine Positionsgültigkeitsinformation PG gebildet. Das Eintragen der Positionsgültigkeitsinformation PG bewirkt, daß diese Parameterstartmeldung PSM an das durch eine folgende Positionsinformation POS bestimmte Kommunikationsendgerät KE übermittelt wird. Diese wiederum 1-Byte umfassende Positionsinformation POS kann beispielsweise wiederum durch eine logische Gerätenummer oder eine Anschlußlageninformation angegeben sein. An die Positionsinformation POS kann eine eine 1-Byte umfassende Information DL-V angefügt sein, die die Version, d. h. den Aktualisierungszustand der anschließend übermittelten Programmparameterdaten P, anzeigt. Die folgenden, jeweils 1-Byte umfassenden Index- und Subindexinformationen IX, SIX geben detailliert an, welche Programmparameterdaten P im Anschluß an diese Parameterstartmeldung PSM übermittelt werden. Die Indexinformationen IX werden beispielsweise durch in Fig. 1 erläuterte, codierte Informationen gebildet. Die Subindexinformationen SIX geben detailliert - wenn erforderlich - die Zuordnung der Programmparameterdaten P an. So ist beispielsweise als Subindexinformation SIX eine physikalische Tastennummerinformation eingetragen, wenn in der Indexinformation IX beispielsweise bestimmt ist, daß die zu übermittelnden Programmparameterdaten P die Tastenbelegung eines Fernsprechers beinhalten. Diese Parameterstartmeldung PSM wird von der Kommunikationsanlage KA gezielt an das durch die Positionsinformation POS bestimmte Kommunikationsendgerät KE übermittelt. In diesem Kommunikationsendgerät KE wird nach Empfang und Auswertung der Parameterstartmeldung PSM das Endgerät auf den Empfang der anschließend von der Kommunikationsanlage KA übermittelten Programmparameterdaten P vorbereitet. Diese Programmparameterdaten P werden mit Hilfe einer Parametermeldung PM von der Kommunikationsanlage KA zum Kommunikationsendgerät KE übermittelt.

Fig. 6 zeigt den prinzipiellen Aufbau einer Parametermeldung PM. Meldungsbeginn-, Meldungsende- und Längeninformation MBI, MEI, L sind wiederum entsprechend Fig. 1 gebildet. Durch eine vorgegebene codierte - beispielsweise sedezimal 2 BH - Meldungscodeinformation DLE ist eine Meldudng als eine Parametermeldung PM bestimmt. Im Anschluß an die Meldungscodeinformation DLE werden die Programmparameterdaten P übertragen. Üblicherweise wird die Anzahl der Bits bzw. Bytes je Parametermeldung PM auf eine vorgegebene Anzahl - beispielsweise 128 Byte - begrenzt. Übersteigt die Menge der Programmparameterdaten die maximale Meldungslänge einer Parametermeldung PM, werden diese durch mehrere Parametermeldungen PM übermittelt. Im Kommunikationsendgerät KE werden die Parameterdaten P empfangen und entsprechend der in der Parameterstartmeldung PSM übermittelten Index- und Subindexinformationen IX, SIX in den jeweils zugeordneten Speicherbereichen des Speichers M der Kommunikationsendeinrichtung KE gespeichert.

## Patentansprüche

1. Verfahren zum Übermitteln kommunikationsendgerätebestimmen der Programmparameterdaten (P) von einer programmgesteuerten Kommunikationsanlage (KA) zu mindestens einem von mehreren an sie angeschlossenen, programmgesteuerten Kommunikationsendgeräten (KE), die jeweils über einen Teilnehmer-Signalisierungsduplexkanal mit der Kommunikationsanlage (KA) mit Hilfe einer meldungsorientierten Übermittlungsprozedur kommunizieren,
- der ein Meldungsprotokoll mit
-- einer Meldungsbeginnzeicheninformation (MBI),
-- einer Information (L), die eine summarische Überprüfung der Informationen eines Informationsteils (NT) und einer Meldungscodeinformation (MC) erlaubt,
-- einer Meldungscodeinformation (MC), die die Art der Meldung anzeigt,
-- einem Informationsteil (NT), der die zu übermittelnden Informationen enthält,
-- sowie einer Meldungsendeinformation
zugrundeliegt, dadurch gekennzeichnet, daß die Übermittlung der Programmparameterdaten folgendermaßen erfolgt:
- nach Vorliegen einer in der Kommunikationsanlage (KA) generierten Parameterübermittlungsanforderung oder
- nach Vorliegen einer im Kommunikationsendgerät (KE) nach
-- jeder Neusynchronisierung der Signalisierung
-- jeder Änderung des Ausbaus des Kommunikationsendgerätes (KE) und
-- jedem Zurücksetzen der Programmsteuerung (St-KE) gebildeten und
-- durch eine vorgegebene Meldungscodeinformation (MC) bestimmte
-- sowie Kommunikationsendgerätetyp (GG, GA), -ausstattung (SON, BS) sowie -position (POS) anzeigende codierte Identifikationsinformationen und
-- eine die Art der angeforderten Programmparameterdaten (P) anzeigende Index-Information (IX) enthaltende
Parameteranforderungsmeldung (PAM) an die Kommunikationsanlage (KA) übermittelte Parameterübermittlungsanforderung wird in der Kommunikationsanlage (KA) eine dem Meldungsprotokoll entsprechende Parameterstartmeldung (PSM) gebildet und an mindestens ein Kommunikationsendgerät (KE) übermittelt,
- wobei die durch eine vorgegebene Meldungscodeinformation (MC) bestimmte Parameterstartmeldung (PSM) im Informationsteil (NT)
-- im Sinne einer Angabe von Zieladressenkriterien Kommunikationsendgerätetyp sowie -position-Informationen (GG, GA, POS) und
-- eine die Art der übermittelten Programmparameterdaten (P) bestimmende Parameterindex- und Subindexinformation (IX, SIX)
enthält,
- anschließend wird an mindestens ein Kommunikationsendgerät (KE) mindestens eine in der Kommunikationsanlage (KA) gebildete Parametermeldung (PM) übermittelt, die durch eine vorgegebene Meldungscodeinformation (MC) bestimmt ist und im Informationsteil (NT) die Programmparameterdaten (P) enthält,
- wobei im Kommunikationsendgerat (KE) die empfangenen Programmparameterdaten (P) anhand des Parameterindexes (IX) und Subindexes (SIX) in jeweils zugeordneten Bereichen eines Speichers (M) gespeichert werden.

2. Verfahren nach Anspruch 1,
**dadurch gekennzeichnet,**
daß im Informationsteil (NT) der Parameterstartmeldung (PSM) eine die summarische Überprüfung der übermittelten Programmparameterdaten (P) ermöglichende Information (LDL) einfügbar ist.

3. Verfahren nach einem der vorhergehenden Ansprüche,
**dadurch gekennzeichnet,**
daß die letzte einer Parameterstartmeldung (PSM) zugeordnete Parametermeldung (PM) durch eine das Übermittlungsende anzeigende, vorgegebene Meldungscodeinformation (MC) bestimmbar ist.

4. Verfahren nach einem der vorhergehenden Ansprüche,
**dadurch gekennzeichnet,**
daß die den Kommunikationsendgerätetyp anzeigende Information (GG, GA)
- in einer Parameteranforderungsmeldung (PAM) durch eine Gerategrößeninformation (GG) und eine Geräteausbauinformation (GA) und
- in einer Parameterstartmeldung (PSM) alternativ durch eine Rundsende- oder Positionsgültigkeitsinformation (PG) bestimmt ist.

5. Verfahren nach einem der vorhergehenden Ansprüche,
**dadurch gekennzeichnet,**
daß eine Kommunikationsendgerateausstattungs-Information (SON, BS) durch eine Sonderausstattungsinformation (SON) und eine aus Typen- und Ausbauinformationen (GG, GA) zusammengesetzte Beistellgeräteinformation (BS) bestimmt wird.

6. Verfahren nach einem der vorhergehenden Ansprüche,
**dadurch gekennzeichnet,**
daß die Positionsinformation (POS) durch eine Gerätenummer oder eine Anschlußlageninformation bestimmbar ist.

## Claims

1. Method for transmitting program parameter data (P) defining communications terminals from a program-controlled communications installation (KA) to at least one of a plurality of program-controlled communications terminals (KE) which are connected to the said communications installation (KA) and which in each case communicate with the communications installation (KA) via a subscriber signalling duplex channel using a message-oriented transmission procedure, which is based on
- a message protocol having
-- a start-of-message character information item (MBI),
-- an information item (L) which permits summary checking of the information items of an information part (NT) and of a message code information item (MC),
-- a message code information item (MC), which indicates the type of message,
-- an information part (NT) which contains the information items to be transmitted, and
-- an end-of-message information item
characterized in that transmission of the program parameter data is carried out as follows:
- on receipt of a parameter transmission request generated in the communications installation (KA) or
- on receipt of a parameter transmission request which has been transmitted to the communications installation (KA) and has been formed in the communications terminal (KE) after
-- each resynchronisation of the signalling
-- each modification of the configuration of the communications terminal (KE) and
-- each resetting of the program controller (St-KE) and of a parameter request message (PAM)
-- which is defined by a predetermined message code information item (MC)
-- and contains coded information items which indicate the type (GG, GA), equipment (SON, BS) and position (POS) of the communications terminals and
-- index information (IX) indicating the type of program parameter data (P) requested,
a start-of-parameter message (PSM) which conforms to the message protocol is formed in the communications installation (KA) and transmitted to at least one communications terminal (KE),
- the start-of-parameter message (PSM) which is defined by a predetermined message code information item (MC) containing in the information part (NT)
-- information items indicating the types and positions of the communications terminals (GG, GA, POS) so that destination address criteria can be specified and
-- a parameter index information item and subindex information item (IX, SIX) which define the type of program parameter data (P) transmitted,
- then at least one parameter message (PM) which has been formed in the communications installation (KA) is transmitted to at least one communications terminal (KE), which parameter message (PM) is defined by a predetermined message code information item (MC) and contains the program parameter data (P) in the information part (NT),
- the received program parameter data (P) being stored on the basis of the parameter index (IX) and subindex (SIX) in the communications terminal (KE), in the regions of a memory (M) assigned in each case.

2. Method according to Claim 1, characterised in that an information item (LDL) which makes summary checking of the transmitted program parameter data (P) possible can be inserted in the information part (NT) of the start-of-parameter message (PSM).

3. Method according to one of the preceding claims, characterized in that the last parameter message (PM) assigned to a start-of-parameter message (PSM) can be defined by a predetermined message code information item (MC) which indicates the end of the transmission.

4. Method according to one of the preceding claims, characterized in that the information item (GG, GA) indicating the type of communications terminal is defined
- in a parameter request message (PAM) by an equipment size information item (GG) and an equipment configuration information item (GA) and
- in a start-of-parameter message (PSM) alternatively by a multiaddress or position validity information item (PG).

5. Method according to one of the preceding claims, characterized in that a communications terminal equipment information item (SON, BS) is defined by a special equipment information item (SON) and by an auxiliary equipment information item (BS) which is composed of type and configuration information items (GG, GA).

6. Method according to one of the preceding claims, characterized in that the position information item (POS) can be defined by an equipment number or by a terminal position information item.

## Revendications

1. Procédé de transmission de données (P) de paramètres de programme, qui déterminent les terminaux de communication, depuis une installation de communication (KA) programmée par programme jusqu'à au moins l'un parmi plusieurs terminaux de communication (KE), qui sont reliés à cette installation, qui sont commandés par programme et qui communiquent, par l'intermédiaire d'un canal duplex de signalisation d'abonné, avec l'installation de communication (KA), à l'aide d'une procédure de transmission qui est axée sur la signalisation et sur laquelle est basé
- un protocole de signalisation incluant
-- une information (MBI) de signaux de début de signalisation,
-- une information (L) qui permet un contrôle sommaire des informations d'une partie d'information (NT) et d'une information de code de signalisation (MC),
-- une information de code de signalisation (MC), qui indique le type de la signalisation,
-- une partie d'information (NT), qui contient les informations devant être transmises,
-- ainsi qu'une information de fin de signalisation,
caractérisé par le fait que la transmission des données de paramètres du programme s'effectue comme suit :
- en présence d'une demande de transmission de paramètres, qui est produite dans l'installation de communication (KA), ou
- en présence d'une demande de transmission de paramètres formée après
-- chaque nouvelle synchronisation de la signalisation,
-- chaque modification de l'agencement du terminal de communication (KA), et
-- chaque remise à l'état initial de la commande de programme (St-KE),
et retransmise à l'installation de communication (KA) sous l'effet d'une signalisation de demande de paramètres (PAM) qui contient
-- des informations codées d'identification déterminées par une information de code de signalisation prédéterminé (MC),
-- et affichant le type (GG,GA), l'équipement (SON, BS) ainsi que la position (POS) des terminaux de communication, et
-- qui contient une information d'index (IX) indiquant le type des données demandées (P) des paramètres du programme,
une demande de départ de paramètres (PSM), qui correspond au protocole de signalisation, est formée dans l'installation de communication (KA) et est transmise à au moins un terminal de communication (KE),
- la signalisation de départ de paramètres (PSM) déterminée par une information prédéterminée de code de signalisation (MC) contenant, dans la partie d'information (NT),
-- des informations (GG, GA, POS) de type et de position de terminaux de communication, dans le sens d'une indication de critères d'adresses de destination, et
-- une information d'index et de sous-index de paramètres (IX, SIX) déterminant le type des données transmises (P) de paramètres du programme, et
- ensuite, à au moins un terminal de communication (KA) est retransmise au moins une signalisation de paramètres (PM) qui est formée dans l'installation de communication (KA), qui est déterminée par une information prédéterminée de code de signalisation (MC) et qui contient, dans la partie d'information (NT), les données (P) de paramètres du programme
- les données reçues (P) des paramètres du programme étant mémorisées, dans le terminal de communication (KE), sur la base de l'index (IX) et du sous-index (SIX) de paramètres dans des zones respectivement associées d'une mémoire (M).

2. Procédé suivant la revendication 1, caractérisé par le fait qu'une information (LDL), qui permet le contrôle somaire des données transmises (P) de paramètres du programme, peut être insérée dans la partie d'information (NT) de la signalisation de départ de paramètres (PSM).

3. Procédé suivant l'une des revendications précédentes, caractérisé par le fait que la dernière signalisation de paramètres (PM), associée à la signalisation de départ de paramètres (PSM), peut être déterminée au moyen d'une information de code de signalisation (MC) prédéterminée et indiquant la fin de la transmission.

4. Procédé suivant l'une des revendications précédentes, caractérisé par le fait que l'information (GG, GA), qui indique le type de terminal de communication est déterminée
- dans une signalisation de demande de paramètres (PAM), par une information de dimension de l'appareil (GG) et une information de construction de l'appareil (GA), et
- en variante, dans une signalisation de départ de paramètres (PSM), par une information (PG) de validité d'émission omnidirectionnelle ou de position.

5. Procédé suivant l'une des revendications précédentes, caractérisé par le fait qu'une information (SON, BS) d'agencement de terminaux de communication est déterminée par une information d'agencement distincte (SON) et par une information (BS) d'appareil disponible, constituée d'informations de type et de structure (GG, GA).

6. Procédé suivant l'une des revendications précédentes, caractérisé par le fait que l'information de position (POS) peut être déterminée par un numéro d'appareil ou une information de positionnement de raccordement.
